# FASCICULE DE BREVET EUROPEEN

(11) **EP 4 078 321 B1**
(45) Date de publication et mention de la délivrance du brevet: **14.08.2024**
(21) Numéro de dépôt: 20823846.9
(22) Date de dépôt: 15.12.2020
(51) Int. Cl.: G05D 1/00

(54) **SYSTÈME ET PROCÉDÉ DE SÉCURISATION D'UNE ZONE GÉOGRAPHIQUE RISQUÉE**
SYSTEM UND VERFAHREN ZUM SICHERN EINES RISKANTEN GEOGRAFISCHEN GEBIETS
SYSTEM AND METHOD FOR SECURING A RISKY GEOGRAPHICAL AREA

(30) Priorité: 20.12.2019 FR 1915212
(43) Date de publication de la demande: 26.10.2022
(73) Titulaire: Airbus Defence and Space SAS, 31402 Toulouse Cedex 4 (FR)
(72) Inventeur: LAUNAY, Nicolas, 78990 ELANCOURT (FR)
(74) Mandataire: Cabinet Le Guen Maillet
(86) Numéro de dépôt international: PCT/EP2020/086286
(87) Numéro de publication internationale: WO 2021/122646

(56) Documents cités:
- US-A1- 2004 030 448
- US-A1- 2006 085 106
- US-A1- 2014 249 744
- US-A1- 2019 353 492

## Description

### DOMAINE TECHNIQUE

La présente invention concerne un procédé et un système de sécurisation d'une zone géographique risquée pour la sécurité des biens et des personnes.

### ETAT DE LA TECHNIQUE ANTERIEURE

Lorsqu'une unité mobile, par exemple un convoi civil ou des troupes armées, se déplace dans une zone géographique risquée pour la sécurité des biens et des personnes, l'unité mobile peut subir des embuscades. La demande WO2018048913 enseigne un procédé de routage dynamique de plusieurs ressources disponibles où des trajectoires de patrouille sont d'abord définies et assignées aux différentes ressources, puis redéfinies et réassignées en cas de détection d'une menace localisée géographiquement.

Il est connu la demande US 2004/030448 A1, qui divulgue un système d'armes en essaim comprenant des véhicules robotiques mobiles (MRV) et des ressources de calcul limitées, et utilisant des ressources complémentaires externes de calcul et de capteurs, pour guider les MRV d'une position à l'autre en temps réel.

Il est aussi connu la demande US 2006/085106 A1, qui divulgue un procédé pour commander le mouvement d'un premier véhicule sans pilote (UV) pour rechercher une zone, le procédé comprenant la génération d'une première trace associée à des positions antérieures du premier UV, et la détermination d'une direction dans laquelle le premier UV doit se déplacer en utilisant la première trace générée. Le procédé peut également comprendre, pour déterminer la direction du premier UV, l'utilisation d'une deuxième trace générée par un deuxième UV.

Il est aussi connu la demande US 2014/249744 A1, qui divulgue un système de planification d'itinéraire qui est monté sur un objet mobile et qui comprend un module de planification d'itinéraire agencé pour planifier un itinéraire de l'objet mobile sur demande, en minimisant les occasions d'être exposé à une menace potentielle dans un champ de tir. Il est aussi connu la demande US 2014/249744 A1, qui divulgue un procédé de transmission, sur un champ de bataille et au personnel de commandement, d'informations relatives à de multiples itinéraires de navigation entre un emplacement de départ et un emplacement d'arrivée, chaque itinéraire étant évalué selon une variété de critères et classé dans une liste en fonction de l'évaluation.

La présente invention vise à améliorer encore la sécurité des biens et des personnes. La présente invention vise notamment à améliorer le plan d'intervention d'une ou plusieurs unités d'adressage. La présente invention vise également à permettre à ces unités d'adressage de couvrir efficacement la zone géographique considérée, que ce soit en termes de reconnaissance aérienne ou terrestre ou en termes d'intervention armée.

### EXPOSE DE L'INVENTION

Il est proposé un procédé de sécurisation d'une zone géographique englobant un parcours, le procédé comprenant les étapes suivantes :
- obtenir une cartographie de la zone géographique englobant ledit parcours ;
- sélectionner au moins une arme, chaque arme étant associée à au moins une modélisation de tir consistant en un modèle de probabilité d'atteindre sa cible lors d'un tir en fonction de la distance de tir;
- déterminer des positions d'abris potentiels de menaces sur la cartographie grâce à un dispositif d'intelligence artificielle entraîné;
- appliquer la modélisation pour chaque arme sélectionnée et pour chaque abris potentiel de menace, en orientant les tirs sur le parcours et en mémorisant et en cumulant l'ensemble des probabilités d'atteindre sa cible sur chaque portion du parcours ;
- identifier les abris potentiels les plus susceptibles de constituer des menaces d'attaque sur le parcours en déterminant les portions du parcours présentant une probabilité d'atteindre la cible supérieure à un seuil déterminé et en sélectionnant les abris potentiels y contribuant le plus ; et
- définir et fournir au moins une trajectoire destinée à au moins une unité d'adressage, où ladite trajectoire est déterminée pour neutraliser lesdits abris potentiels les plus susceptibles de constituer des menaces d'attaque.

Ainsi afin de prévenir des menaces d'embuscades, la zone géographique en question est inspectée, et ainsi sécurisée, de façon optimum grâce aux unités d'adressage en fonction du parcours. Une unité d'adressage est une entité physique capable d'interagir avec un centre de commandement et de surveiller voire neutraliser un objectif donné. Par exemple, un drone volant sans pilote, un drone terrestre voire un essaim de drones peut constituer une unité d'adressage.

Selon une particularité de l'invention, le procédé est suivi d'une exécution de la ou des trajectoires par la ou les unités d'adressage.

Selon une autre particularité, la cartographie contient des informations d'élévation. Ainsi, la recherche des abris potentiels est plus fine.

Selon une autre particularité, la cartographie se présente sous la forme d'une modélisation de terrain 3D.

Selon une particularité, la cartographie est obtenue à partir d'images satellitaires ou aériennes de ladite zone géographique englobant ledit parcours, ces images étant combinées et/ou agrégées. Des surveillances aériennes récentes peuvent avantageusement être utilisées pour tenir compte des derniers aménagements du terrain.

Selon une autre particularité, ledit seuil pour la probabilité d'atteindre la cible pour chaque portion du parcours, est réajusté au minimum tout en ayant chaque distance totale de chaque trajectoire, destiné à chaque unité d'adressage, inférieure à une capacité d'autonomie de cette unité d'adressage. Ainsi le parcours est sécurisé au maximum en fonction des capacités d'adressage disponibles.

Selon une autre particularité, une pluralité de trajectoires sont calculées pour une pluralité d'unités d'adressage, ledit seuil pour la probabilité d'atteindre la cible pour chaque portion du parcours étant réajusté pour que la somme des distances totales parcourues lors des trajectoires soit inférieure à la somme des autonomies des unités d'adressage. Là encore l'utilisation des unités d'adressage est optimum.

Selon une autre particularité, avant d'appliquer la modélisation pour chaque arme et pour chaque abri potentiel de menace, on vérifie, dans une étape précédente, la compatibilité de la présence de chaque arme en fonction d'une topologie de l'abri potentiel de menace.

Selon une autre particularité, la modélisation de chaque arme tient compte de données climatiques. Ainsi, il peut être aisément tenu compte de probabilités d'atteindre la cible dégradées en fonction des conditions climatiques.

Selon une autre particularité, la sélection de ladite arme est effectuée dans une base de données mémorisant, pour chaque arme, ladite modélisation ainsi qu'une probabilité de présence de l'arme en fonction d'une localisation géographique mémorisée pouvant correspondre à la zone géographique englobant ledit parcours, les armes pouvant être sélectionnée automatiquement en fonction de leur probabilité de présence.

Selon une autre particularité, avant d'appliquer la modélisation pour chaque arme et pour chaque abri potentiel de menace, des positions d'abris potentiels de menaces sont ajoutées sur la cartographie grâce à des retours d'opérateurs sur le terrain. Ainsi le procédé d'évaluation des menaces conserve une souplesse de mise en oeuvre en permettant l'ajout d'information de terrain.

Il est aussi proposé un produit programme d'ordinateur, comportant des instructions entraînant l'exécution, par un processeur, du procédé mentionné ci-dessus, lorsque lesdites instructions sont exécutées par le processeur. Il est aussi proposé un support de stockage d'informations sur lequel est stocké un tel produit programme d'ordinateur.

Il est aussi proposé un serveur en liaison avec au moins un centre de commandement pour la sécurisation d'une zone géographique englobant un parcours, le serveur comprenant de la circuiterie électronique configurée pour :
- obtenir une cartographie de la zone géographique englobant ledit parcours ;
- obtenir ou sélectionner au moins une arme, chaque arme étant associée à une modélisation de tir consistant en un modèle de probabilité d'atteindre sa cible lors d'un tir en fonction de la distance de tir;
- déterminer des positions d'abris potentiels de menaces sur la cartographie grâce à un dispositif d'intelligence artificielle entraîné;
- appliquer la modélisation pour chaque arme sélectionnée et pour chaque abris potentiel de menace, en orientant les tirs sur le parcours et en mémorisant et en additionnant l'ensemble des probabilités d'atteindre sa cible sur chaque portion du parcours ;
- identifier les abris potentiels les plus susceptibles de constituer des menaces d'attaque sur le parcours en déterminant les portions du parcours présentant une probabilité d'atteindre la cible supérieure à un seuil déterminé et en sélectionnant les abris potentiels y contribuant le plus ; et
- définir et fournir au moins une trajectoire destinée à au moins une unité d'adressage, où ladite trajectoire est déterminée pour neutraliser lesdits abris potentiels les plus susceptibles de constituer des menaces d'attaque.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un organigramme d'un algorithme de définition de plan d'intervention d'une ou plusieurs unités d'adressage ;
[Fig. 2] illustre schématiquement un exemple d'architecture matérielle d'un système configuré pour implémenter l'algorithme de la Fig. 1 ; et
[Fig. 3] illustre schématiquement un système pour la définition et la mise en place du plan d'intervention ;
[Fig.4] illustre une cartographie incluant un parcours à sécuriser ;
[Fig.5] illustre une base de données incluant plusieurs armes.

### EXPOSE DETAILLE DE MODES DE REALISATION

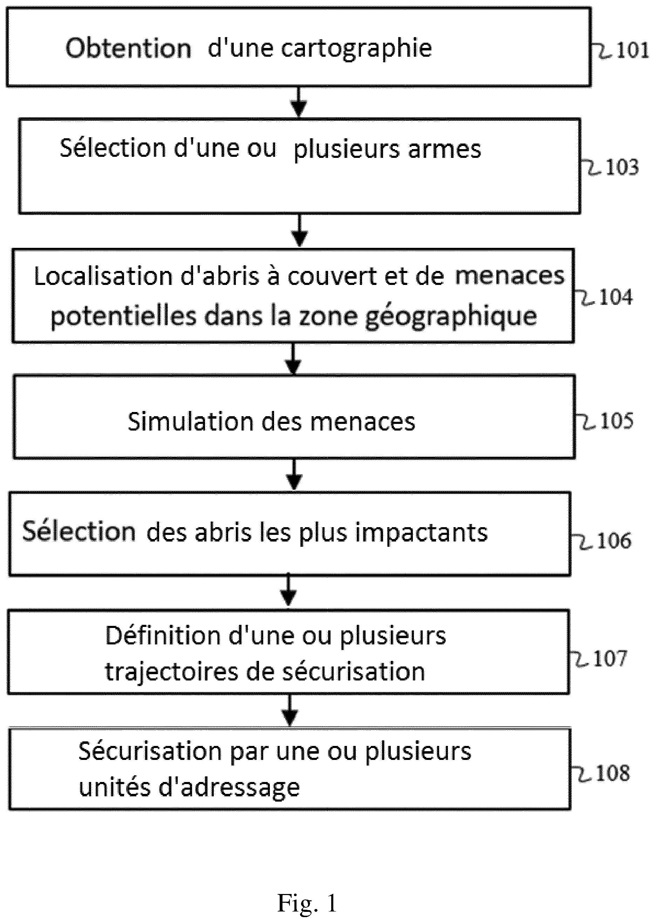

La **Fig. 1** illustre schématiquement un organigramme d'un algorithme de définition de plan d'intervention d'une ou plusieurs unités d'adressage. L'algorithme est implémenté par une unité de traitement informatique. Il est considéré de manière illustrative que l'algorithme de la Fig. 1 est implémenté par un serveur de définition du plan d'intervention 310, appelé serveur PDS (« Plan Définition Server » en anglais) par la suite.

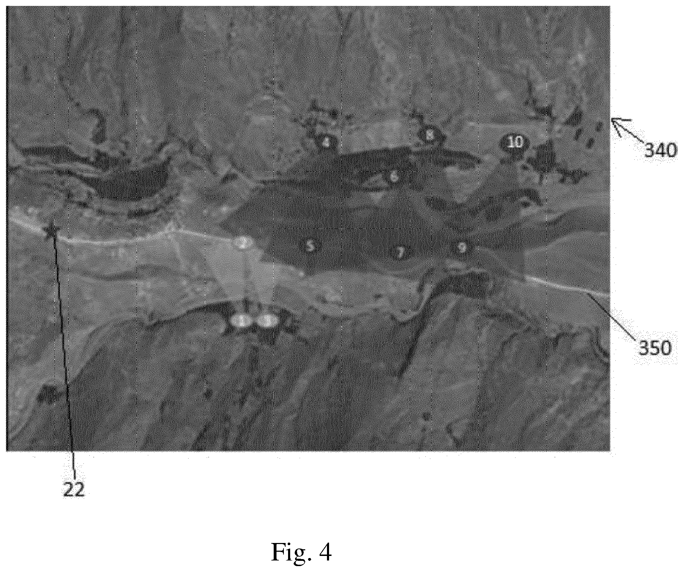

Dans une étape 101, le serveur PDS 310 obtient une cartographie incluant un parcours 350 à prendre en considération. Un exemple de cartographie 340 incluant un parcours 350 est donné à la figure 4. Un convoi 22 est indiqué par une étoile. Ici le parcours correspond à une voie carrossable mais on pourrait envisager tout type de parcours 350.

Le descriptif de parcours est fourni par exemple via une interface utilisateur ou via un fichier de description. Un centre de commandement CC 320 peut également fournir le descriptif du parcours 350 au serveur PDS 310. Le descriptif de parcours correspond à un descriptif d'un ensemble de positions géographiques qui sont successivement liées.

Les coordonnées du parcours sont par exemple indiquées par des points de passage, ces points étant reliés entre eux par des lignes droites pour former le parcours dans son ensemble. Le parcours peut être plaqué sur une cartographie 2D ou projeté sur une cartographie 3D.

Des reliefs apparaissent sur la cartographie de la zone géographique, ici en 2D. On pourrait aussi envisager une cartographie se présentant sous la forme d'un modèle numérique de terrain en 3D. La cartographie peut également se présenter sous la forme d'une cartographie 2D incluant des informations d'élévation sous la forme de métadonnées.

Le serveur PDS 310 définit par exemple une zone géographique à considérer s'étendant à une distance déterminée de part et d'autre du parcours. La zone géographique est référencée grâce à des coordonnées de géolocalisation. A partir de ces coordonnées de géolocalisation, le serveur PDS 310 peut récupérer, à partir d'une ou plusieurs bases de données, des images de terrain de la zone géographique concernée, telles que des images satellite ou des images prises par des aéronefs à haute altitude de type HAPS (« High Altitude Platform Stations » en anglais). Ces images sont par exemple agrégées pour couvrir l'ensemble de la zone géographique concernée.

Ces images peuvent aussi être combinées pour former des modèles d'élévation de la zone géographique. Les modèles d'élévation sont par exemple agrégés pour former un modèle d'élévation de l'ensemble de la zone géographique.

Le serveur peut aussi obtenir directement un modèle d'élévation de l'ensemble de la zone géographique via un serveur dédié opérant une base de données où les modèles d'élévation sont calculés à l'avance et stockés en vue de leur exploitation. La modélisation du terrain est alors obtenue auprès d'un serveur 3D auquel le serveur PDS 310 fournit un descriptif de la zone géographique concernée. Par exemple, la modélisation du terrain avec élévation peut être obtenue à partir de la base de données WorldEM, DTED (Detailed Terrain Elevation Data) ou de la librairie OneAtlas (marque déposée). Le serveur PDS 310 peut aussi fournir au serveur 3D les images de terrain récupérées et, si disponible, le modèle d'élévation récupéré, afin que le serveur 3D s'en serve pour établir une nouvelle modélisation du terrain de la zone géographique considérée.

Le modèle d'élévation permet avantageusement d'effectuer des calculs dans l'espace plus réalistes et plus de précis que sur une cartographie 2D. La cartographie 2D ou 3D est avantageusement texturée. Le serveur PDS 310 peut en outre exploiter des informations de datation des images ou des modèles 3D, pour sélectionner les données les plus récentes.

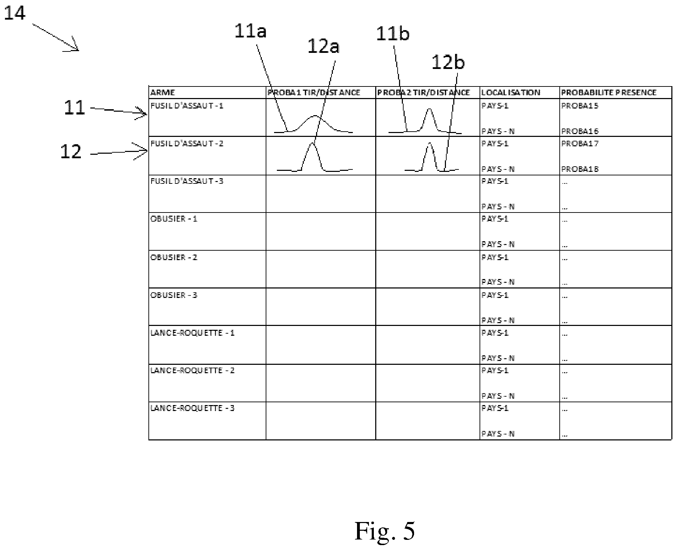

Dans une étape 103, le serveur PDS 310 obtient une sélection d'une ou plusieurs armes. Les armes sont issues d'une base de données 14, comme représenté à la figure 5. La base de données 14 comprend par exemple une première arme 11, correspondant à un premier type de fusil d'assaut, à laquelle est associée une probabilité 11a d'atteindre sa cible en fonction de la distance. Les armes sont en effet plus ou moins efficaces selon leur précision. On parle par exemple de différentes distances efficaces de différentes armes. Ici on prend avantageusement en compte toutes les distances de tir et chaque risque qui en résulte. Une deuxième arme 12 est associée à une autre probabilité 12a d'atteindre sa cible en fonction de la distance.

La base de données comprend par exemple au moins une deuxième probabilité 11b ou 12b associée à chaque arme et correspondant à la probabilité d'atteindre sa cible en fonction de la distance mais dans des conditions différentes. Il s'agit par exemple de la probabilité dégradée par temps pluvieux, venteux ou neigeux. Ainsi, il est possible de prendre en compte les conditions climatiques impliquant une efficacité dégradée d'une arme.

La base de données 14 comprend par exemple des données géographiques et une probabilité associée de présence de l'arme. Les données géographiques comprennent par exemple des pays, référencé PAYS-1 à PAYS-N, auxquels sont associés une probabilité de présence, référencée PROBA15, PROBA16, PROBA17 et PROBA18. Ainsi la sélection d'une arme via une interface utilisateur peut être guidée ou la sélection peut être automatiquement implémentée en fonction d'une localisation géographique du parcours.

Le descriptif d'armes peut en variante être fourni via une interface utilisateur ou via un fichier de description.

La modélisation d'une arme inclut la dispersion des tirs par un soldat de compétences moyennes, en fonction de la distance.

Dans une étape 104, le serveur PDS 310 localise, sur la cartographie, des abris pour des armes, c'est-à-dire des positions à couvert. La localisation des abris est réalisée par un module d'intelligence artificielle de détection et de classification d'images ou de modèles 3D, mis au point par apprentissage automatique (« machine learning » en anglais). Ce module de détection des abris se présente par exemple sous la forme d'un réseau neuronal à convolution CNN (« Convolutional Neural Network » en anglais). Le module de détection des abris prend en entrée la cartographie 2D ou respectivement 3D et fournit en sortie des localisations 2D ou respectivement 3D des abris sur la cartographie. Ces localisations sont ajoutées à la cartographie qui est alors enrichie.

Le module de détection des abris peut faire partie du serveur PDS 310. Ce module de détection et de classification d'images ou de modèles 3D par apprentissage automatique est par exemple entraîné à partir d'images ou de modèles 3D auxquels des experts ont ajouté des marqueurs de positionnement d'abris potentiels. Ces images ou modèles sont ainsi complétés par des marqueurs ou « labels » en anglais. L'apprentissage peut être réalisé par des algorithmes de type PCA (« Principal Component Analysis » en anglais) ou ReLU (« Rectified Linear Units » en anglais).

Une étape optionnelle peut comprendre l'ajout manuel de positions d'abris potentiels en fonction des informations collectées sur le terrain, telles que des connaissances de points à haut-risque (« high-venture points » en anglais) ou de résultats de missions passées. Ainsi le procédé garde de la souplesse pour pouvoir prendre en compte certaines réalités du terrain.

Une étape optionnelle peut comprendre, la vérification de la topologie de chaque abri au vu de chaque arme sélectionnée. La topologie de chaque abri peut être déterminée par le module de détection d'abris, les données d'entraînement marquées par les experts comprenant des caractéristiques sur la nature des abris tels que par exemple des reliefs artificiels tels que des murs ou des bâtiments, ou des reliefs naturels tels que des arbres, des crêtes ou des cavités. Ainsi en cas d'abri incompatible avec un certain type d'arme, cette arme ne sera pas simulée pour cet abri. On peut ainsi tenir compte du fait que certains abris sont impraticables avec certains types d'armes. Par exemple, un abri adéquat pour une utilisation de mortier peut ne pas l'être pour un fusil dès lors qu'un obstacle de terrain obstrue la ligne de vue entre l'abri en question et le parcours 350. Par exemple un abri adéquat pour un fusil d'assaut dans un lieu particulièrement escarpé ne sera pas adapté à un obusier tiré.

Dans une étape 105, le serveur PDS 310 simule les menaces en fonction des armes sélectionnées et des localisations des abris potentiels identifiés. La modélisation des armes sélectionnées est appliquée à chaque position d'abri potentiel, en orientant les caractéristiques des tirs potentiels sur le parcours 350. Le serveur DPS calcule notamment la distance entre l'abri et une ou plusieurs portions du parcours et les probabilités de tir qui en résultent. Les tirs sur les portions du parcours pour lesquelles la probabilité de tir est inférieure à un seuil déterminé sont par exemple ignorés, c'est-à-dire qu'ils ne sont pas comptabilisés. Le champ d'action de chaque arme ainsi que la probabilité d'atteindre une cible en fonction de la distance sont donnés par la modélisation de l'arme en question. Par exemple, pour l'arme référencée « FUSIL D'ASSAUT-1 » on peut considérer que la probabilité d'atteindre une cible est de 90% à 30 mètres, de 80% à 80 mètres et de 50% à 200m. Dans des conditions pluvieuses, pour cette même arme, la probabilité d'atteindre une cible est de 70% à 30 mètres, de 50% à 80 mètres et de 20% à 200m. Cet exemple n'est qu'illustratif et la modélisation de l'arme peut comprendre un échantillonnage des distances beaucoup plus fin. La probabilité de tir est par exemple différentiée pour un écart d'un mètre ou pour un écart de 10cm, pour des distances pouvant aller jusqu'à plusieurs centaines de mètres voire plusieurs kilomètres.

Les probabilités d'impact sur le parcours 350 sont calculées et cumulées pour chaque portion du parcours, pour l'ensemble des abris et pour l'ensemble des armes sélectionnées. Avantageusement, les conditions climatiques peuvent être prises en compte.

Dans une étape suivante 106, on sélectionne les abris les plus impactant par rapport au risque calculé pour chaque portion du parcours. Comme représenté à la figure 4, les points référencés 2, 5, 7 et 9 sont au-delà d'un seuil de risque acceptable. Ce seuil de risque peut être réglé. Un module de sélection des abris impactant effectue par exemple une sélection, à partir de ces calculs de risques, au-delà du seuil acceptable, des abris contribuant à ce risque notamment pour ramener le risque à un niveau acceptable.

Ce module de sélection des abris impactant est par exemple un module de détection et de classification des données par apprentissage automatique. Le module de sélection des abris impactant se présente par exemple sous la forme d'un arbre de probabilité (« random forest » en anglais). Le module de sélection des abris impactant peut également se présenter sous la forme d'un réseau neuronal profond. Le module de sélection des abris impactant peut être entraîné par régression logarithmique (« Logistic Regression » en anglais) ou par régression linéaire régularisée (« Regularized Linear Régression » en anglais). D'autres algorithmes tels que GDR (Gradient Decent Régression) ou d'autres algorithmes de classification peuvent également être envisagés. Le module de sélection des abris impactant peut être entraîné à l'aide d'analyses d'experts. Le module de sélection des abris impactant peut aussi être entraîné à l'aide de données de retour de missions pour caractériser les distances d'embuscade particulièrement dangereuses.

On pourrait envisager un module de sélection des abris impactant réalisant une sélection des abris potentiels les plus susceptibles de constituer des menaces sur le parcours 350 par corrélation des distances séparant les abris potentiels identifiés et des plages efficaces des armes sélectionnées.

Par exemple, le module de sélection des abris peut être un module de détection et de classification de données par apprentissage automatique utilisant un arbre de probabilités pour corréler les distances séparant les abris potentiels identifiés et les plages efficace des armes sélectionnées.

Dans un modèle à 2D, les calculs sur les distances de tirs peuvent être approximés en considérant les projections au sol.

Comme représenté à la figure 4, les abris impactant 1, 3, 4, 6, 8 et 10 ont été sélectionnés.

Dans une étape 107, le serveur PDS 310 sélectionne des points de passages correspondant aux abris potentiels de menaces à neutraliser 1, 3, 4, 6, 8 et 10. La procédure STAR (de l'anglais Standard Terminal Arrival Route) peut être utilisée pour définir chaque trajectoire.

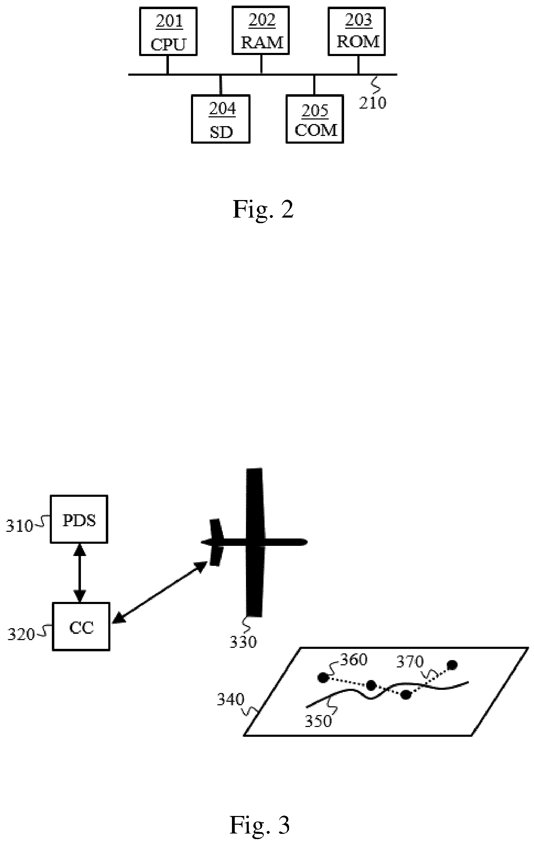

Le serveur PDS 310 peut définir un plan d'intervention comprenant une ou plusieurs trajectoires (ou « waypoints » en anglais). La figure 3 montre un exemple de trajectoire 370 reliant des points 360.

Les drones par exemple aériens disposent chacun d'une autonomie. Ainsi il importe que la trajectoire assignée à un drone présente une distance totale inférieure à la capacité du drone. On peut aussi considérer une autonomie optimisée correspondant à un niveau de ressource déterminé selon un plan d'optimisation des ressources disponibles visant à conserver une marge de manoeuvre ou visant à permettre des mesures d'urgence ou à permettre d'autres usages des unités d'adressage.

Le serveur peut établir plusieurs trajectoires parcourues successivement par un même drone réalisant un ravitaillement en énergie entre deux trajectoires.

Plusieurs trajectoires peuvent aussi être réalisées pour plusieurs drones volant simultanément, chaque trajectoire ayant une distance totale inférieure à l'autonomie du drone auquel elle est assignée.

Les unités d'adressage 330 peuvent par exemple être du type aérien ou terrestre. Les unités d'adressage peuvent se présenter sous la forme de drone ou sous la forme de véhicules pilotés.

Une unité d'adressage peut également se présenter sous la forme d'un essaim de drones ou sous la forme d'une patrouille de véhicules.

Préférentiellement, le serveur PDS 310 définit la pluralité de trajectoires en tenant compte d'une information préconfigurée de capacité d'autonomie de chaque unité d'adressage à laquelle le plan d'intervention est destiné.

Le serveur PDS 310 peut notamment ajuster le seuil prédéfini utilisé pour sélectionner les points de passages en fonction d'une capacité d'autonomie de la ou des unités d'adressage auxquelles le plan d'intervention est destiné. Ainsi, lorsque la capacité d'autonomie ne permet pas de couvrir les points de passage sélectionnés, le serveur PDS 310 peut augmenter le seuil prédéfini. Et lorsque la capacité d'autonomie permet d'inclure plus de points de passage dans le plan d'intervention, le serveur PDS 310 peut diminuer le seuil prédéfini. L'étape 106 peut par exemple être réitérée en considérant le seuil ajusté. Avantageusement, le seuil de risque sur chaque portion du parcours 350 peut être réglé. En augmentant ce seuil de risque tolérable sur le parcours, on diminue le besoin de sécurisation et la ressource nécessaire en drone. En diminuant ce risque tolérable sur le parcours, on augmente la sécurité. La gestion du risque peut ainsi être optimisée en fonction des ressources disponibles.

Dans une étape 108, le serveur PDS 310 fournit le plan d'intervention comprenant une ou plusieurs trajectoires de sécurisation destinées à une ou plusieurs unités d'adressage.

Le serveur PDS 310 peut également présenter le plan d'intervention via une interface utilisateur, par exemple sous forme graphique par superposition du plan d'intervention à la cartographique du terrain.

Le serveur PDS 310 peut par exemple fournir le plan d'intervention à un centre de commandement CC 320. Le serveur PDS 310 peut également fournir le plan d'intervention directement à une ou plusieurs unités d'adressage 330, comme par exemple un drone ou une flotte de drones.

La **Fig. 2** illustre schématiquement un exemple d'architecture matérielle du serveur PDS 310. Le serveur PDS 310 comporte alors, reliés par un bus de communication 210 : un ou plusieurs processeurs ou CPUs (« Central Processing Unit » en anglais) 201 ; une mémoire vive RAM (« Read-Only Memory » en anglais) 202 ; une mémoire morte ROM (« Read Only Memory » en anglais) 203, par exemple de type EEPROM (« Electrically-Erasable Programmable ROM » en anglais) ou une mémoire Flash ; une unité de stockage 204, telle qu'un disque dur HDD (« Hard Disk Drive » en anglais), ou un lecteur de support de stockage, tel qu'un lecteur de cartes SD (« Secure Digital » en anglais) ; un gestionnaire d'interfaces de communication COM 205.

Le gestionnaire d'interfaces de communication COM 205 permet au serveur PDS 310 de communiquer avec un utilisateur et/ou une interface physique de connexion, par exemple pour recevoir le descriptif du parcours 350 à considérer, ou pour fournir le plan d'intervention.

Le processeur 201 est capable d'exécuter des instructions chargées dans la mémoire vive RAM 202 à partir de la mémoire morte ROM 203, d'une mémoire externe, d'un support de stockage (tel qu'une carte mémoire amovible du type SD), ou d'un réseau de communication. Lorsque le serveur PDS 310 est mis sous tension, le CPU 201 est capable de lire de la mémoire vive RAM 202 des instructions et de les exécuter. Ces instructions forment un programme d'ordinateur causant l'implémentation, par le processeur 201, de tout ou partie des étapes, fonctionnements et comportements décrits ici en relation avec le serveur PDS 310.

Tout ou partie des étapes, fonctionnements et comportements décrits ici en relation avec le serveur PDS 310 peut ainsi être implémenté sous forme logicielle par exécution d'un ensemble d'instructions par une machine programmable, par exemple un processeur de type DSP (« Digital Signal Processor » en langue anglo-saxonne) ou un microprocesseur, ou être implémenté sous forme matérielle par une machine ou un composant dédié, par exemple un composant FPGA (« Field Programmable Gate Array » en langue anglo-saxonne) ou ASIC (« Application Specific Integrated Circuit » en langue anglo-saxonne). D'une manière générale, le serveur PDS 310 comporte de la circuiterie électronique adaptée et configurée pour implémenter, sous forme logicielle et/ou matérielle, les étapes, fonctionnements et comportements décrits ici en relation avec le serveur PDS 310.

La **Fig. 3** illustre schématiquement un système pour la définition et la mise en place du plan d'intervention fourni grâce à l'exécution de l'algorithme de la Fig. 1. La Fig. 3 montre le serveur PDS 310 connecté au centre de commandement CC 320. Le centre de commandement CC 320 est par exemple configuré pour fournir au serveur PDS 310 le descriptif du parcours 350 à considérer. Le serveur PDS 310 est par exemple configuré pour définir le plan d'intervention au vu du parcours 350 et pour fournir le plan d'intervention au centre de commandement CC 320. Le serveur pourrait être également intégré dans un centre de commandement.

Le centre de commandement CC 320 est par exemple connecté à une ou plusieurs unités d'adressage 330 et est configuré pour transférer leur trajectoire aux unités d'adressage 330. Le plan d'intervention définit au moins une trajectoire 370 à suivre pour effectuer une surveillance des points de passage 360 sélectionnés par le serveur PDS 310. Ainsi, une opération de sécurisation du parcours 350 peut être menée par la ou les unités d'adressage 330 en suivant le plan d'intervention défini par le serveur PDSS 310.

## Revendications

1. Procédé de sécurisation d'une zone géographique englobant un parcours, le procédé comprenant les étapes suivantes :
- obtenir une cartographie (340) de la zone géographique englobant ledit parcours (350) ;
- déterminer des positions (1, 3, 4, 6, 8, 10) d'abris potentiels de menaces sur la cartographie (340) grâce à un dispositif d'intelligence artificielle entraîné;
- définir et fournir au moins une trajectoire (370) destinée à au moins une unité d'adressage (330), où ladite trajectoire est déterminée pour neutraliser les abris potentiels les plus susceptibles de constituer des menaces d'attaque,
caractérisé en que le procédé comprend les étapes suivantes :
- sélectionner au moins une arme (11,12), chaque arme étant associée à au moins une modélisation (11a, 11b, 12a, 12b) de tir consistant en un modèle de probabilité d'atteindre sa cible lors d'un tir en fonction de la distance de tir;
- appliquer la modélisation pour chaque arme sélectionnée et pour chaque abris potentiel de menace, en orientant les tirs sur le parcours (350) et en mémorisant et en cumulant l'ensemble des probabilités d'atteindre sa cible sur chaque portion du parcours ;
- identifier les abris potentiels (1, 3, 4, 6, 8, 10) les plus susceptibles de constituer des menaces d'attaque sur le parcours en déterminant les portions (2, 5, 7, 9) du parcours présentant une probabilité d'atteindre sa cible supérieure à un seuil déterminé et en sélectionnant les abris potentiels y contribuant le plus.

2. Procédé selon la revendication 1, **caractérisé en ce qu'**il est suivi d'une exécution de la ou des trajectoires (370) par la ou les unités d'adressage (330).

3. Procédé selon la revendication 1 ou 2, dans lequel la cartographie (340) contient des informations d'élévation.

4. Procédé selon l'une des revendications 1 à 3, dans lequel la cartographie (340) se présente sous la forme d'une modélisation de terrain 3D.

5. Procédé selon l'une des revendications 1 à 4, dans lequel la cartographie (340) est obtenue à partir d'images satellitaires ou aériennes de ladite zone géographique englobant ledit parcours (350), ces images étant combinées et/ou agrégées.

6. Procédé selon l'une quelconque des revendications 1 à 5, dans lequel ledit seuil pour la probabilité d'atteindre la cible pour chaque portion du parcours, est réajusté au minimum tout en ayant chaque distance totale de chaque trajectoire (370), destinée à chaque unité d'adressage, inférieure à une capacité d'autonomie de cette unité d'adressage.

7. Procédé selon la revendication 6, **caractérisé en ce qu'**une pluralité de trajectoires (370) sont calculées pour une pluralité d'unités d'adressage (330), ledit seuil pour la probabilité d'atteindre la cible pour chaque portion du parcours étant réajusté pour que la somme des distances totales parcourues lors des trajectoires soit inférieure à la somme des autonomies des unités d'adressage.

8. Procédé selon l'une quelconque des revendications 1 à 7, dans lequel avant d'appliquer la modélisation pour chaque arme (11, 12) et pour chaque abri (1, 3, 4, 6, 8, 10) potentiel de menace, on vérifie, dans une étape précédente, la compatibilité de la présence de chaque arme en fonction d'une topologie de l'abri potentiel de menace.

9. Procédé selon l'une quelconque des revendications 1 à 8, dans lequel la modélisation (11b, 12b) de chaque arme tient compte de données climatiques.

10. Procédé selon l'une quelconque des revendications 1 à 9, dans lequel la sélection de ladite arme est effectuée dans une base de données (14) mémorisant, pour chaque arme, ladite modélisation ainsi qu'une probabilité (proba15, proba16, proba17, proba18) de présence de l'arme en fonction d'une localisation géographique (pays-1, pays-N) mémorisée pouvant correspondre à la zone géographique englobant ledit parcours (350), les armes pouvant être sélectionnée automatiquement en fonction de leur probabilité de présence.

11. Procédé selon l'une quelconque des revendications 1 à 10, dans lequel avant d'appliquer la modélisation pour chaque arme (11, 12) et pour chaque abri (1, 3, 4, 6, 8, 10) potentiel de menace, des positions d'abris potentiels de menaces sont ajoutées sur la cartographie grâce à des retours d'opérateurs sur le terrain.

12. Produit programme d'ordinateur, comportant des instructions entraînant l'exécution, par un processeur, du procédé selon l'une quelconque des revendications 1 à 11, lorsque lesdites instructions sont exécutées par le processeur.

13. Support de stockage, stockant un programme d'ordinateur comportant des instructions entraînant l'exécution, par un processeur, du procédé selon l'une quelconque des revendications 1 à 11, lorsque lesdites instructions sont lues et exécutées par le processeur.

14. Serveur (310) en liaison avec au moins un centre de commandement (320) pour la sécurisation d'une zone géographique englobant un parcours, le serveur (310) comprenant de la circuiterie électronique configurée pour :
- obtenir une cartographie (340) de la zone géographique englobant ledit parcours (350) ;
- déterminer des positions d'abris potentiels de menaces sur la cartographie (340) grâce à un dispositif d'intelligence artificielle entraîné;
- définir et fournir au moins une trajectoire (370) destinée à au moins une unité d'adressage (330), où ladite trajectoire est déterminée pour neutraliser les abris potentiels les plus susceptibles de constituer des menaces d'attaque,
**caractérisé en ce que** la circuiterie électronique est configurée pour :
- obtenir ou sélectionner au moins une arme (11, 12), chaque arme étant associée à une modélisation de tir consistant en un modèle de probabilité (11a, 11b, 12a, 12b) d'atteindre sa cible lors d'un tir en fonction de la distance de tir;
- appliquer la modélisation pour chaque arme sélectionnée (11, 12) et pour chaque abris potentiel de menace, en orientant les tirs sur le parcours (350) et en mémorisant et en additionnant l'ensemble des probabilités d'atteindre sa cible sur chaque portion du parcours ;
- identifier les abris (1, 3, 4, 6, 8, 10) potentiels les plus susceptibles de constituer des menaces d'attaque sur le parcours en déterminant les portions (2, 5, 7, 9) du parcours (350) présentant une probabilité d'atteindre sa cible supérieure à un seuil déterminé et en sélectionnant les abris potentiels y contribuant le plus.

## Patentansprüche

1. Verfahren zum Sichern eines geografischen Gebiets, das eine Strecke umschließt, wobei das Verfahren die folgenden Schritte beinhaltet:
- Erhalten einer Kartierung (340) des geografischen Gebiets, das die Strecke (350) umschließt;
- Bestimmen von Positionen (1, 3, 4, 6, 8, 10) potenzieller Bedrohungsverstecke auf der Kartierung (340) mit Hilfe einer trainierten Künstliche-Intelligenz-Vorrichtung;
- Definieren und Bereitstellen mindestens einer Bahn (370), die für mindestens eine Adressierungseinheit (330) bestimmt ist, wobei die Bahn bestimmt wird, um die potenziellen Verstecke, die am ehesten Bedrohungen durch einen Angriff darstellen, zu neutralisieren,
**dadurch gekennzeichnet, dass** das Verfahren die folgenden Schritte beinhaltet:
- Auswählen mindestens einer Waffe (11, 12), wobei jede Waffe mit mindestens einer Schussmodellierung (11a, 11b, 12a, 12b) assoziiert ist, die aus einem Modell einer Wahrscheinlichkeit des Erreichens des Ziels bei einem Schuss in Abhängigkeit von der Schussentfernung besteht;
- Anwenden der Modellierung für jede ausgewählte Waffe und für jedes potenzielle Bedrohungsversteck durch das Ausrichten der Schüsse auf die Strecke (350) und durch das Speichern und das Kumulieren der Gesamtheit der Wahrscheinlichkeiten des Erreichens des Ziels auf jedem Abschnitt der Strecke;
- Identifizieren der potenziellen Verstecke (1, 3, 4, 6, 8, 10), die am ehesten Bedrohungen durch einen Angriff auf die Strecke darstellen, durch das Bestimmen der Abschnitte (2, 5, 7, 9) der Strecke, die eine Wahrscheinlichkeit des Erreichens des Ziels aufweisen, die größer als eine bestimmte Schwelle ist, und durch das Auswählen der potenziellen Verstecke, die dazu am meisten beitragen.

2. Verfahren nach Anspruch 1, **dadurch gekennzeichnet, dass** auf dieses eine Ausführung der einen oder der mehreren Bahnen (370) durch die eine oder die mehreren Adressierungseinheiten (330) folgt.

3. Verfahren nach Anspruch 1 oder 2, wobei die Kartierung (340) Höheninformationen enthält.

4. Verfahren nach einem der Ansprüche 1 bis 3, wobei die Kartierung (340) in Form einer 3D-Geländemodellierung vorliegt.

5. Verfahren nach einem der Ansprüche 1 bis 4, wobei die Kartierung (340) anhand von Satelliten- oder Luftbildern des geografischen Gebiets, das die Strecke (350) umschließt, erhalten wird, wobei diese Bilder kombiniert und/oder aggregiert werden.

6. Verfahren nach einem beliebigen der Ansprüche 1 bis 5, wobei die Schwelle für die Wahrscheinlichkeit des Erreichens des Ziels für jeden Abschnitt der Strecke auf ein Minimum eingestellt wird, dabei aber jede Gesamtentfernung jeder Bahn (370), die für jede Adressierungseinheit bestimmt ist, kleiner als eine Reichweitenkapazität dieser Adressierungseinheit ist.

7. Verfahren nach Anspruch 6, **dadurch gekennzeichnet, dass** eine Vielzahl von Bahnen (370) für eine Vielzahl von Adressierungseinheiten (330) berechnet wird, wobei die Schwelle für die Wahrscheinlichkeit des Erreichens des Ziels für jeden Abschnitt der Strecke so eingestellt wird, dass die Summe der während der Bahnen zurückgelegten Gesamtentfernungen kleiner als die Summe der Reichweiten der Adressierungseinheiten ist.

8. Verfahren nach einem beliebigen der Ansprüche 1 bis 7, wobei vor dem Anwenden der Modellierung für jede Waffe (11, 12) und für jedes potenzielle Bedrohungsversteck (1, 3, 4, 6, 8, 10) in einem vorhergehenden Schritt die Kompatibilität der Präsenz jeder Waffe in Abhängigkeit von einer Topologie des potenziellen Bedrohungsverstecks überprüft wird.

9. Verfahren nach einem beliebigen der Ansprüche 1 bis 8, wobei die Modellierung (11b, 12b) jeder Waffe Klimadaten berücksichtigt.

10. Verfahren nach einem beliebigen der Ansprüche 1 bis 9, wobei die Auswahl der Waffe in einer Datenbank (14) erfolgt, in der für jede Waffe die Modellierung sowie eine Wahrscheinlichkeit (proba15, proba16, proba17, proba18) einer Präsenz der Waffe in Abhängigkeit von einem gespeicherten geografischen Standort (Land-1, Land-N), der dem geografischen Gebiet, das die Strecke (350) umschließt, entsprechen kann, gespeichert ist, wobei die Waffen in Abhängigkeit von ihrer Präsenzwahrscheinlichkeit automatisch ausgewählt werden können.

11. Verfahren nach einem beliebigen der Ansprüche 1 bis 10, wobei vor dem Anwenden der Modellierung für jede Waffe (11, 12) und für jedes potenzielle Bedrohungsversteck (1, 3, 4, 6, 8, 10) Positionen potenzieller Bedrohungsverstecke mit Hilfe von Rückmeldungen von Akteuren in dem Gelände zu der Kartierung hinzugefügt werden.

12. Computerprogrammprodukt, das Anweisungen umfasst, die die Ausführung, durch einen Prozessor, des Verfahrens nach einem beliebigen der Ansprüche 1 bis 11 bewirken, wenn die Anweisungen durch den Prozessor ausgeführt werden.

13. Speichermedium, das ein Computerprogramm speichert, das Anweisungen umfasst, die die Ausführung, durch einen Prozessor, des Verfahrens nach einem beliebigen der Ansprüche 1 bis 11 bewirken, wenn die Anweisungen durch den Prozessor gelesen und ausgeführt werden.

14. Server (310) in Verbindung mit mindestens einer Kommandozentrale (320) zum Sichern eines geografischen Gebiets, das eine Strecke umschließt, wobei der Server (310) elektronische Schaltkreise beinhaltet, die zu Folgendem konfiguriert sind:
- Erhalten einer Kartierung (340) des geografischen Gebiets, das die Strecke (350) umschließt;
- Bestimmen von Positionen potenzieller Bedrohungsverstecke auf der Kartierung (340) mit Hilfe einer trainierten Künstliche-Intelligenz-Vorrichtung;
- Definieren und Bereitstellen mindestens einer Bahn (370), die für mindestens eine Adressierungseinheit (330) bestimmt ist, wobei die Bahn bestimmt wird, um die potenziellen Verstecke, die am ehesten Bedrohungen durch einen Angriff darstellen, zu neutralisieren,
**dadurch gekennzeichnet, dass** die elektronischen Schaltkreise zu Folgendem konfiguriert sind:
- Erhalten oder Auswählen mindestens einer Waffe (11, 12), wobei jede Waffe mit mindestens einer Schussmodellierung assoziiert ist, die aus einem Modell einer Wahrscheinlichkeit (11a, 11b, 12a, 12b) des Erreichens des Ziels bei einem Schuss in Abhängigkeit von der Schussentfernung besteht;
- Anwenden der Modellierung für jede ausgewählte Waffe (11, 12) und für jedes potenzielle Bedrohungsversteck durch das Ausrichten der Schüsse auf die Strecke (350) und durch das Speichern und das Summieren der Gesamtheit der Wahrscheinlichkeiten des Erreichens des Ziels auf jedem Abschnitt der Strecke;
- Identifizieren der potenziellen Verstecke (1, 3, 4, 6, 8, 10), die am ehesten Bedrohungen durch einen Angriff auf die Strecke darstellen, durch das Bestimmen der Abschnitte (2, 5, 7, 9) der Strecke (350), die eine Wahrscheinlichkeit des Erreichens des Ziels aufweisen, die größer als eine bestimmte Schwelle ist, und durch das Auswählen der potenziellen Verstecke, die dazu am meisten beitragen.

## Claims

1. Method for securing a geographical area encompassing a route, the method comprising the following steps:
- obtaining a map (340) of the geographical area encompassing said route (350);
- determining positions (1, 3, 4, 6, 8, 10) of potential refuges of threats on the map (340) by virtue of a trained artificial-intelligence device;
- defining and providing at least one trajectory (370) intended for at least one addressing unit (330), where said trajectory is determined in order to neutralize the potential refuges most likely to constitute threats of attack,
**characterized in that** the method comprises the following steps:
- selecting at least one arm (11, 12), each arm being associated with at least one firing model (11a, 11b, 12a, 12b) consisting of a model of the probability of hitting the target upon firing according to the firing distance;
- applying the model for each selected arm and for each potential refuge of threats, by directing the firing on the route (350) and by storing and by summing all of the probabilities of hitting the target on each portion of the route;
- identifying the potential refuges (1, 3, 4, 6, 8, 10) most likely to constitute threats of attack on the route by determining the portions (2, 5, 7, 9) of the route having a probability of hitting the target above a determined threshold and by selecting the potential refuges contributing most thereto.

2. Method according to Claim 1, **characterized in that** it is followed by the one or more trajectories (370) being executed by the one or more addressing units (330).

3. Method according to Claim 1 or 2, wherein the map (340) contains elevation information.

4. Method according to one of Claims 1 to 3, wherein the map (340) is in the form of a 3D terrain model.

5. Method according to one of Claims 1 to 4, wherein the map (340) is obtained from satellite or aerial images of said geographical area encompassing said route (350), these images being combined and/or aggregated.

6. Method according to any one of Claims 1 to 5, wherein said threshold for the probability of hitting the target for each portion of the route is readjusted to the minimum while at the same time keeping each total distance of each trajectory (370), intended for each addressing unit, less than a range of this addressing unit.

7. Method according to Claim 6, **characterized in that** a plurality of trajectories (370) are computed for a plurality of addressing units (330), said threshold for the probability of hitting the target for each portion of the route being readjusted in order for the sum of the total distances which are covered during the trajectories is less than the sum of the ranges of the addressing units.

8. Method according to any one of Claims 1 to 7, wherein, before applying the model for each arm (11, 12) and for each potential refuge (1, 3, 4, 6, 8, 10) of threats, the compatibility of the presence of each arm according to the topology of the potential refuge of threats is checked in a preceding step.

9. Method according to any one of Claims 1 to 8, wherein the model (11b, 12b) of each arm takes account of climate data.

10. Method according to any one of Claims 1 to 9, wherein said arm is selected from a database (14) storing, for each arm, said model as well as a probability (proba15, proba16, proba17, proba18) of the arm being present according to a stored geographical location (pays-1, pays-N) which may correspond to the geographical area encompassing said route (350), the arms being able to be selected automatically according to the probability of them being present.

11. Method according to any one of Claims 1 to 10, wherein, before applying the model for each arm (11, 12) and for each potential refuge (1, 3, 4, 6, 8, 10) of threats, positions of potential refuges of threats are added to the map by virtue of feedback from operators on the ground.

12. Computer program product comprising instructions causing the method according to any one of Claims 1 to 11 to be executed by a processor when said instructions are executed by the processor.

13. Storage medium storing a computer program comprising instructions causing the method according to any one of Claims 1 to 11 to be executed by a processor when said instructions are read and executed by the processor.

14. Server (310) connected to at least one command centre (320) for securing a geographical area encompassing a route, the server (310) comprising electronic circuitry configured to:
- obtain a map (340) of the geographical area encompassing said route (350);
- determine positions of potential refuges of threats on the map (340) by virtue of a trained artificial-intelligence device;
- define and provide at least one trajectory (370) intended for at least one addressing unit (330), where said trajectory is determined in order to neutralize the potential refuges most likely to constitute threats of attack,
**characterized in that** the electronic circuitry is configured to:
- obtain or select at least one arm (11, 12), each arm being associated with a firing model consisting of a model (11a, 11b, 12a, 12b) of the probability of hitting the target upon firing according to the firing distance;
- apply the model for each selected arm (11, 12) and for each potential refuge of threats, by directing the firing on the route (350) and by storing and by adding all of the probabilities of hitting the target on each portion of the route;
- identify the potential refuges (1, 3, 4, 6, 8, 10) most likely to constitute threats of attack on the route by determining the portions (2, 5, 7, 9) of the route (350) having a probability of hitting the target above a determined threshold and by selecting the potential refuges contributing most thereto.
